# EUROPEAN PATENT SPECIFICATION

(11) **EP 3 473 441 B1**
(45) Date of publication and mention of the grant of the patent: **19.05.2021**
(21) Application number: 17382705.6
(22) Date of filing: 23.10.2017
(51) Int. Cl.: B33Y 10/00, B33Y 30/00, B29C 67/00

(54) **MOVEABLE MOLDING ASSEMBLY FOR USE WITH ADDITIVE MANUFACTURING**
BEWEGLICHE FORMANORDNUNG ZUR VERWENDUNG IN DER GENERATIVEN FERTIGUNG
ENSEMBLE DE MOULAGE MOBILE DESTINÉ À ÊTRE UTILISÉ AVEC UNE FABRICATION ADDITIVE

(43) Date of publication of application: 24.04.2019
(73) Proprietor: General Electric Company, Schenectady, NY 12345 (US)
(72) Inventor: ACOSTA, Pere Cortada, 08005 Barcelona (ES); MUNIZ, Cesar, 08005 Barcelona (ES)
(74) Representative: Zimmermann & Partner Patentanwälte mbB

(56) References cited:
- WO-A1-2017/110375
- WO-A1-2017/150186
- DE-A1- 10 065 960
- DE-A1- 10 148 967
- DE-A1-102014 011 230
- BRIAN N. TURNER, SCOTT A. GOLD: "A review of melt extrusion additive manufacturing processes: II. Materials, dimensional accuracy, and surface roughness", RAPID PROTOTYPING JOURNAL, vol. 21, no. 3, 2015, XP002777942, ISSN: 1355-2546
- YUWEI ZHAI, DIANA A. LADOS, JANE L. LAGOY: "Additive Manufacturing: Making Imagination the Major Limitation", JOM, vol. 66, no. 5, 2014, XP002777943,

## Description

### FIELD

The present disclosure relates generally to additive manufacturing, and more particularly to systems and methods for additive manufacturing that include moveable molds to improve the surface finish of the final product.

### BACKGROUND

Various manufacturing methods may be used to manufacture large components. For example, common manufacturing methods for manufacturing large components may include casting or welding. Casting is a manufacturing process in which a liquid material is usually poured into a mold having a hollow cavity of the desired shaped. The liquid material is then allowed to cure. Though the parts may be formed quickly and easily with a decent deposition rate, such methods require expensive molds which are difficult to modify. In addition, the shape of the part is restricted and the final parts are heavy.

Welding manufacturing processes for forming large components require joining materials together via welds to form the final part. Welding provides lower deposition rates than casting but may produce lighter parts. Further, the base materials used for welding are typically steel plates that must be forged, worked, folded, bended, beveled, etc. and then joined via a plurality of welds. As such, welding can also be a time-consuming process.

More modern manufacturing processes include additive manufacturing, which refers to the process by which digital three-dimensional (3D) design data is used to build up a component in layers by depositing material. There are a number of different technologies used in metal additive manufacturing systems. Such systems are generally classified by the energy source used or the method in which the material is being joined, e.g. via a binder, laser, heated nozzle, etc. Classification of the process is also possible based on the group of materials being processed, such as plastics, metals, or ceramics, as well as the feedstock state (e.g. powder, wire, sheet, or liquid).

More specifically, in powder-fed directed energy deposition, a high power laser is used to melt metal powder supplied to the focus of the laser beam. A hermetically sealed chamber filled with inert gas or a local inert shroud gas is often used to shield the melt pool from atmospheric oxygen for better control of material properties. The process can not only fully build new metal parts but can also add material to existing parts for example for coatings, repair, and hybrid manufacturing applications.
Document WO 2017/1510186 A1 relates to a three-dimensional printing apparatus and a three-dimensional printing method for forming a structure by sequentially arranging printing materials and solidifying them.

In metal wire additive manufacturing processes (i.e. laser-based wire feed systems, such as Laser Metal Deposition Wire), feed wire is thread through a nozzle and melted by a laser using inert gas shielding in either an open environment (gas surrounding the laser), or in a sealed chamber. Electron beam freeform fabrication uses an electron beam heat source inside a vacuum chamber. In such systems, the feed wire is used to build the component using successive weld beads, one above the other.

In additive manufacturing, an important limitation of the process is the deposition rate. Currently, the additive manufacturing process having the highest deposition rate is with the wire systems. As such, metal wire additive manufacturing processes have many advantages versus others manufacturing processes (such as casting), but can create components with a poor surface finish, which is not ideal for the fatigue life thereof. DE102014011230A1 and/or WO2017110375A1 discloses material removal by machining to improve surface finish.

Thus, the present disclosure is directed to a moveable molding assembly that can be used with additive manufacturing systems that utilize a wire system so as to create a final product having a desirable surface finish.

### BRIEF DESCRIPTION

Aspects and advantages of the invention will be set forth in part in the following description, or may be obvious from the description, or may be learned through practice of the invention.

In one aspect, the present disclosure is directed to an additive manufacturing system for producing a component as defined in claim 1. The additive manufacturing system includes a substrate, a nozzle mounted relative to the substrate for depositing a material onto the substrate, a curing system for curing the material on the substrate, and a moveable molding assembly. As such, the cured material builds up on the substrate to form the component using successive layers atop each other. Further, the moveable molding assembly is arranged on an exterior surface of the successive layers. Thus, the moveable molding assembly is configured to move with the nozzle so as to mold the material before the material has cured. Accordingly, the moveable molding assembly is configured to provide a desired surface finish without having to further machine the final component after the part has cured. The moveable molding assembly may include a first mold and a second mold. Thus, the first and second molds may be arranged on opposing sides of the component so as to laterally limit the melted material.

In one embodiment, the moveable molding assembly(s) may be mounted to the nozzle.

In further embodiments, the molds of the moveable molding assembly may be constructed of ceramic, plastic, metal, a magnetic material, and/or another other suitable material. In yet another embodiment, the moveable molding assembly(s) may include a roller or a sliding plate. Alternatively, the moveable molding assembly may operate without contact, e.g. using pressurized air, magnetic repulsion, or similar.

In additional embodiments, the moveable molding assembly may also include various features to assist in providing the desired surface finish. For example, the moveable molding assembly may include a cooling system to assist in curing the component after the melted material has been limited as desired. Further, the moveable molding assembly may include a non-stick system to prevent the mold from sticking to the layers of melted material.

In several embodiments, the additive manufacturing system may include one or more sensors for monitoring of the exterior surface of the layers. In such embodiments, the moveable molding assembly is configured to move based on the monitoring.

In particular embodiments, the moveable molding assembly may be placed in a predetermined location with respect to the material. For example, the predetermined location may include forward, beside, or aft of the distal end.

In certain embodiments, the material may include powder, a wire, and combinations thereof. In addition, the curing system may include a laser generator, an electron gun, a plasma generator, a cold spray system, an arc welding system, or any other suitable system for curing the material.

For example, in one embodiment, the wire may be moveably positioned through the nozzle and arranged adjacent to the substrate. In such embodiments, the curing system is configured to melt a distal end of the wire as the distal end of the wire is fed through the nozzle. Thus, the melted wire may be used to build up the component using successive layers atop each other.

In additional embodiments, the wire may be melted by the laser using inert gas shielding in either an open environment or in a sealed chamber.

In further embodiments, the component may include a wind turbine component, including but not limited to a rotor, a nacelle, a tower, a blade root section, a blade tip section, a spar cap, a shear web, a rotor blade panel, and/or another other wind turbine component. More specifically, in such embodiments, the rotor blade panel may include a pressure side surface, a suction side surface, a trailing edge, a leading edge, or combinations thereof.

In another aspect, the present disclosure is directed to a method for producing a component via additive manufacturing as defined in claim 10. The method includes arranging a nozzle of the additive manufacturing system relative to a substrate thereof. Further, the method includes feeding a material through the nozzle and onto the substrate. Moreover, the method includes melting the material as the material is fed through the nozzle. In addition, the method includes building up the component using successive layers of the melted material. Further, the method includes molding the melted material while still in a semi-solid state so as to provide a desired surface finish of the component. It should also be understood that the method may further include any of the additional steps and/or features as described herein.

In yet another aspect, the present disclosure is directed to a method for producing a wind turbine component via additive manufacturing. The method includes feeding a distal end of a wire through a nozzle and onto a substrate. The method also includes melting, via a laser, the distal end of the wire as the distal end is fed through the nozzle. Further, the method includes building up the component using successive layers of the melted wire. In addition, the method includes limiting flow of the melted wire while still in a semi-solid state so as to provide a desired surface finish of the wind turbine component. It should also be understood that the method may further include any of the additional steps and/or features as described herein.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a perspective view of one embodiment of a wind turbine according to the present disclosure;
FIG. 2 illustrates a perspective view of one embodiment of a rotor blade of a wind turbine according to the present disclosure;
FIG. 3 illustrates an exploded view of the modular rotor blade of FIG. 2;
FIG. 4 illustrates a schematic diagram of one embodiment of an additive manufacturing system according to the present disclosure;
FIG. 5 illustrates a schematic diagram of another embodiment of an additive manufacturing system according to the present disclosure;
FIG. 6 illustrates a schematic diagram of still another embodiment of an additive manufacturing system according to the present disclosure;
FIG. 7 illustrates a schematic diagram of yet another embodiment of an additive manufacturing system according to the present disclosure;
FIG. 8 illustrates a schematic diagram of a further embodiment of an additive manufacturing system according to the present disclosure;
FIG. 9 illustrates a schematic diagram of an additional embodiment of an additive manufacturing system according to the present disclosure;
FIG. 10 illustrates a detailed, schematic diagram of one embodiment of an additive manufacturing system according to the present disclosure;
FIG. 11 illustrates a front view of one embodiment of a component being produced via an additive manufacturing system having a molding assembly according to the present disclosure;
FIG. 12 illustrates a detailed, front view of one embodiment of a component being produced via an additive manufacturing system having a molding assembly according to the present disclosure;
FIG. 13 illustrates a schematic diagram of one embodiment of a controller of an additive manufacturing system according to the present disclosure; and
FIG. 14 illustrates a flow diagram of one embodiment of a method for producing a component via an additive manufacturing system according to the present disclosure.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope of the invention. For instance, features illustrated or described as part of one embodiment can be used with another embodiment to yield a still further embodiment. Thus, it is intended that the present invention covers such modifications and variations as come within the scope of the appended claims and their equivalents.

Generally, the present disclosure is directed to methods for manufacturing components using additive manufacturing that have an improved surface finish. More specifically, the present disclosure includes a system having a moveable or tracking molding assembly that follows the welding nozzle. As such, the molding assembly molds the deposited material when still in a semi-solid state. For example, in certain embodiments, the molding assembly is configured to laterally limit the molten material so as to improve the surface roughness and provide improved control of the wall thickness of the component.

Thus, the systems and methods described herein provide many advantages not present in the prior art. For example, the systems and methods of the present disclosure provide the ability to easily manufacture large components. More specifically, in certain embodiments, the systems and methods of the present disclosure may be particularly useful in manufacturing wind turbine components. In addition, the present disclosure provides a high level of automation, faster throughput, and reduced tooling costs and/or higher tooling utilization.

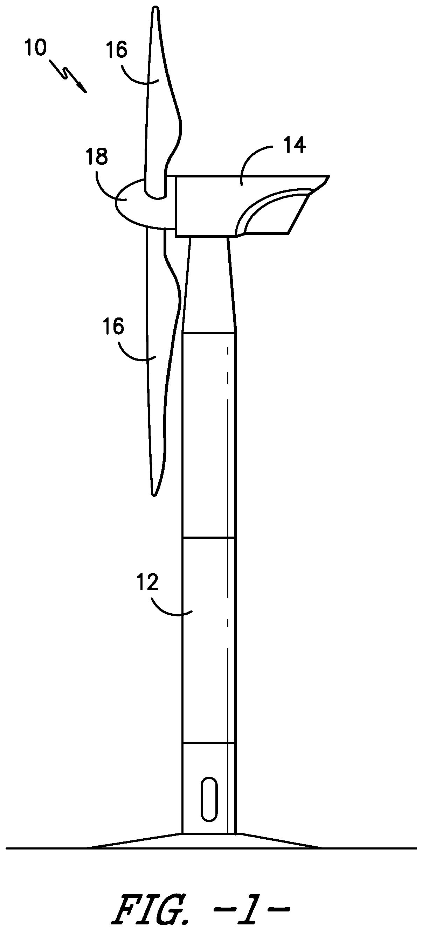

Referring now to the drawings, FIG. 1 illustrates a perspective view of one embodiment of a wind turbine 10 according to the present disclosure. The wind turbine 10 of FIG. 1 is provided as an example system that can benefit from wire feed additive manufacturing systems and moveable molds as described herein so as to manufacture the various components thereof. Those of ordinary skill in the art will appreciate that FIG. 1 is not meant to be limiting and is provided for illustrative purposes only. In other words, the systems and methods of the present disclosure can be applied in any suitable technology field in addition to wind turbines that requires the manufacturing of components with a smooth surface finish.

As shown, the wind turbine 10 includes a tower 12 with a nacelle 14 mounted thereon. A plurality of rotor blades 16 are mounted to a rotor hub 18, which is in turn connected to a main flange that turns a main rotor shaft. The wind turbine power generation and control components are housed within the nacelle 14. The view of FIG. 1 is provided for illustrative purposes only to place the present invention in an exemplary field of use. It should be appreciated that the invention is not limited to any particular type of wind turbine configuration. In addition, the present invention is not limited to use with wind turbines, but may be utilized in any application having rotor blades.

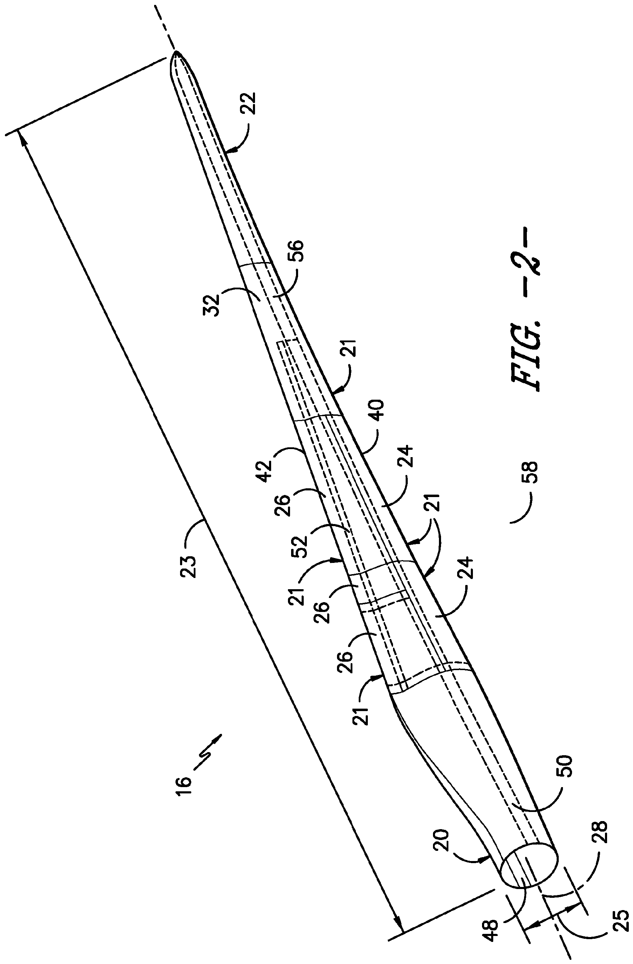

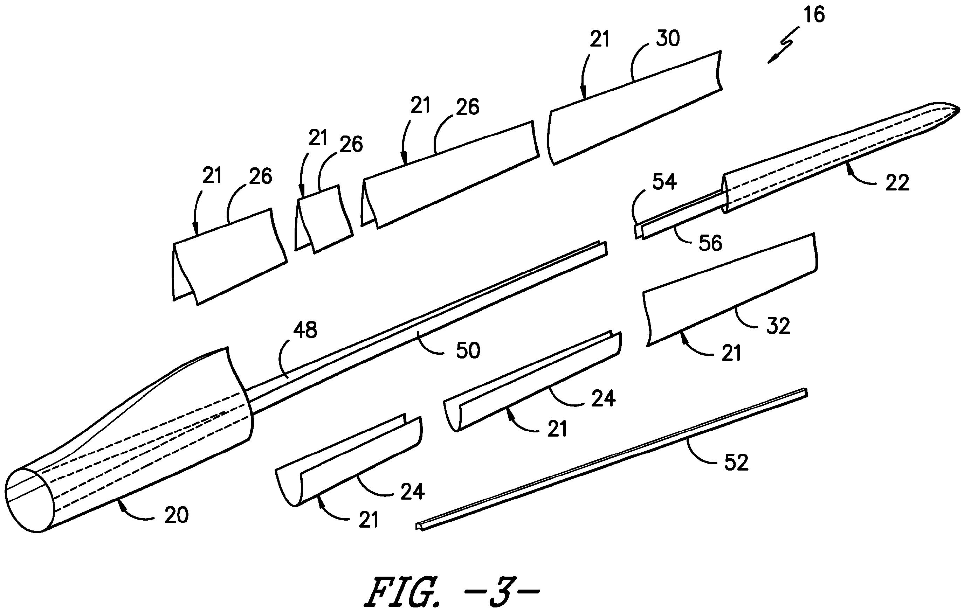

Referring now to FIGS. 2 and 3, various views of a rotor blade 16 according to the present disclosure are illustrated. As shown, the rotor blade 16 may have a segmented or modular configuration. It should also be understood that the rotor blade 16 may include any other suitable configuration now known or later developed in the art. For example, as shown, the rotor blade 16 may include a pre-formed blade root section 20, a pre-formed blade tip section 22, one or more one or more continuous spar caps 48, 50, 54, 56, one or more shear webs (not shown), an additional structural component 52 secured to the blade root section 20 (e.g. an additional spar cap/shear web), and/or any other suitable structural component of the rotor blade 16. Further, the blade root section 20 is configured to be mounted or otherwise secured to the rotor 18 (FIG. 1). In addition, as shown in FIG. 2, the rotor blade 16 defines a span 23 that is equal to the total length between the blade root section 20 and the blade tip section 22. As shown in FIG. 2, the rotor blade 16 also defines a chord 25 that is equal to the total length between a leading edge 40 of the rotor blade 16 and a trailing edge 42 of the rotor blade 16. As is generally understood, the chord 25 may generally vary in length with respect to the span 23 as the rotor blade 16 extends from the blade root section 20 to the blade tip section 22.

More specifically, as shown, the spar caps 48, 50, 54, 56 may be configured to be engaged against opposing inner surfaces of the blade segments 21 of the rotor blade 16. Further, the blade root spar caps 48, 50 may be configured to align with the blade tip spar caps 54, 56. Thus, the spar caps 48, 50, 54, 56 may generally be designed to control the bending stresses and/or other loads acting on the rotor blade 16 in a generally span-wise direction (a direction parallel to the span 23 of the rotor blade 16) during operation of a wind turbine 10. In addition, the spar caps 48, 50, 54, 56 may be designed to withstand the span-wise compression occurring during operation of the wind turbine 10. Further, the spar cap(s) 48, 50, 54, 56 may be configured to extend from the blade root section 20 to the blade tip section 22 or a portion thereof. Thus, in certain embodiments, the blade root section 20 and the blade tip section 22 may be joined together via their respective spar caps 48, 50, 54, 56. The spar caps 48, 50, 54, 56 may be constructed of any suitable materials, e.g. a thermoplastic or thermoset material or combinations thereof. Further, the spar caps 48, 50, 54, 56 may be pultruded from thermoplastic or thermoset resins.

Referring still to FIGS. 2 and 3, any number of blade segments 21 having any suitable size and/or shape may be generally arranged between the blade root section 20 and the blade tip section 22 along a longitudinal axis 28 in a generally span-wise direction. Thus, the blade segments 21 generally serve as the outer casing/covering of the rotor blade 16 and may define a substantially aerodynamic profile, such as by defining a symmetrical or cambered airfoil-shaped cross-section. In additional embodiments, it should be understood that the blade segment portion of the blade 16 may include any combination of the segments described herein and are not limited to the embodiment as depicted. In addition, the blade segments 21 may be constructed of any suitable materials, including but not limited to a thermoset material or a thermoplastic material optionally reinforced with one or more fiber materials. More specifically, in certain embodiments, the blade segments 21 may include any one of or combination of the following blade segments: pressure and/or suction side segments (30, 32), leading and/or trailing edge segments (24, 26), a non-jointed segment, a single-jointed segment, a multi-jointed blade segment, a J-shaped blade segment, or similar.

The thermoplastic rotor blade components and/or materials as described herein generally encompass a plastic material or polymer that is reversible in nature. For example, thermoplastic materials typically become pliable or moldable when heated to a certain temperature and returns to a more rigid state upon cooling. Further, thermoplastic materials may include amorphous thermoplastic materials and/or semi-crystalline thermoplastic materials. For example, some amorphous thermoplastic materials may generally include, but are not limited to, styrenes, vinyls, cellulosics, polyesters, acrylics, polysulphones, and/or imides. More specifically, exemplary amorphous thermoplastic materials may include polystyrene, acrylonitrile butadiene styrene (ABS), polymethyl methacrylate (PMMA), glycolised polyethylene terephthalate (PET-G), polycarbonate, polyvinyl acetate, amorphous polyamide, polyvinyl chlorides (PVC), polyvinylidene chloride, polyurethane, or any other suitable amorphous thermoplastic material. In addition, exemplary semi-crystalline thermoplastic materials may generally include, but are not limited to polyolefins, polyamides, fluropolymer, ethyl-methyl acrylate, polyesters, polycarbonates, and/or acetals. More specifically, exemplary semi-crystalline thermoplastic materials may include polybutylene terephthalate (PBT), polyethylene terephthalate (PET), polypropylene, polyphenyl sulfide, polyethylene, polyamide (nylon), polyetherketone, or any other suitable semi-crystalline thermoplastic material.

Further, the thermoset components and/or materials as described herein generally encompass a plastic material or polymer that is non-reversible in nature. For example, thermoset materials, once cured, cannot be easily remolded or returned to a liquid state. As such, after initial forming, thermoset materials are generally resistant to heat, corrosion, and/or creep. Example thermoset materials may generally include, but are not limited to, some polyesters, some polyurethanes, esters, epoxies, or any other suitable thermoset material.

In addition, as mentioned, the thermoplastic and/or the thermoset material as described herein may optionally be reinforced with a fiber material, including but not limited to glass fibers, carbon fibers, polymer fibers, ceramic fibers, nanofibers, metal fibers, or similar or combinations thereof. In addition, the direction of the fibers may include biaxial, unidirectional, triaxial, or any other another suitable direction and/or combinations thereof. Further, the fiber content may vary depending on the stiffness required in the corresponding blade component, the region or location of the blade component in the rotor blade 16, and/or the desired weldability of the component.

As used herein, the terms "pultruded," "pultrusions," or similar generally encompass reinforced materials (e.g. fibers or woven or braided strands) that are impregnated with a resin and pulled through a stationary die such that the resin cures or undergoes polymerization. As such, the process of manufacturing pultruded members is typically characterized by a continuous process of composite materials that produces composite parts having a constant cross-section. Thus, the pre-cured composite materials may include pultrusions constructed of reinforced thermoset or thermoplastic materials. Further, the spar caps 48, 50, 54, 56 may be formed of the same pre-cured composites or different pre-cured composites. In addition, the pultruded components may be produced from rovings, which generally encompass long and narrow bundles of fibers that are not combined until joined by a cured resin.

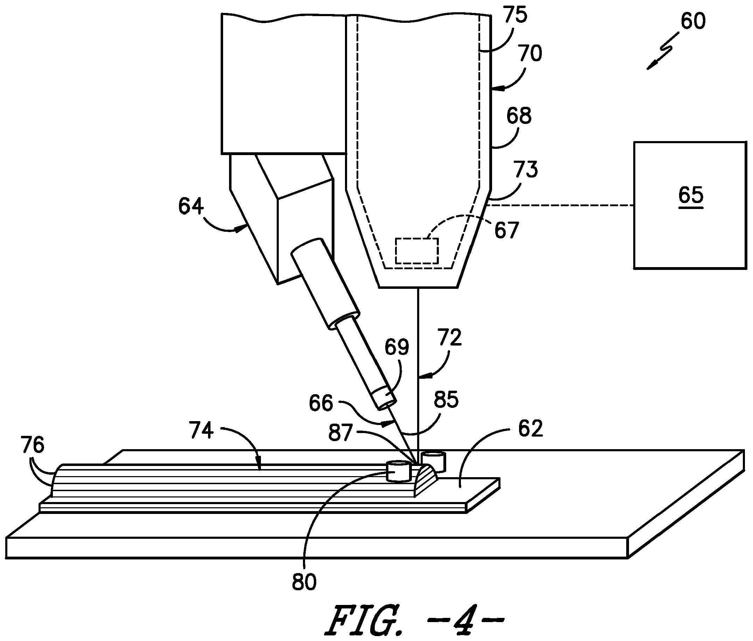

Referring now to FIGS. 4-14, the present disclosure is directed to systems and methods for producing a component using additive manufacturing, e.g. 3D printing. For example, in one embodiment, the systems and methods of the present disclosure may be used to produce a wind turbine component, such as the various component described herein, including but not limited to the tower 12, the rotor 18, the nacelle 14, the blade root section 20, the blade tip section 22, the spar caps 48, 50, 54, 56, the shear webs, the rotor blade panels 21, and/or another other wind turbine component. 3D printing, as used herein, is generally understood to encompass processes used to synthesize three-dimensional objects in which successive layers of material are formed under computer control to create the objects. As such, objects of almost any size and/or shape can be produced from digital model data.

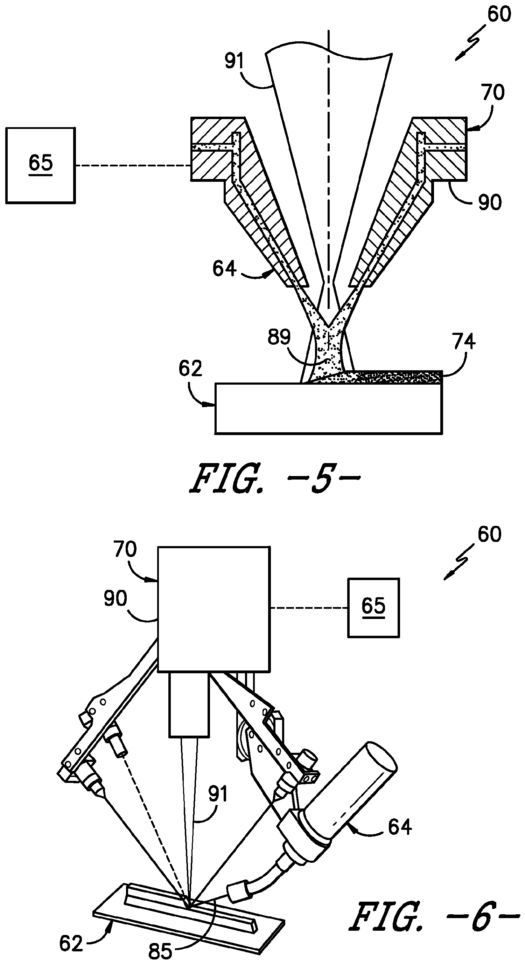

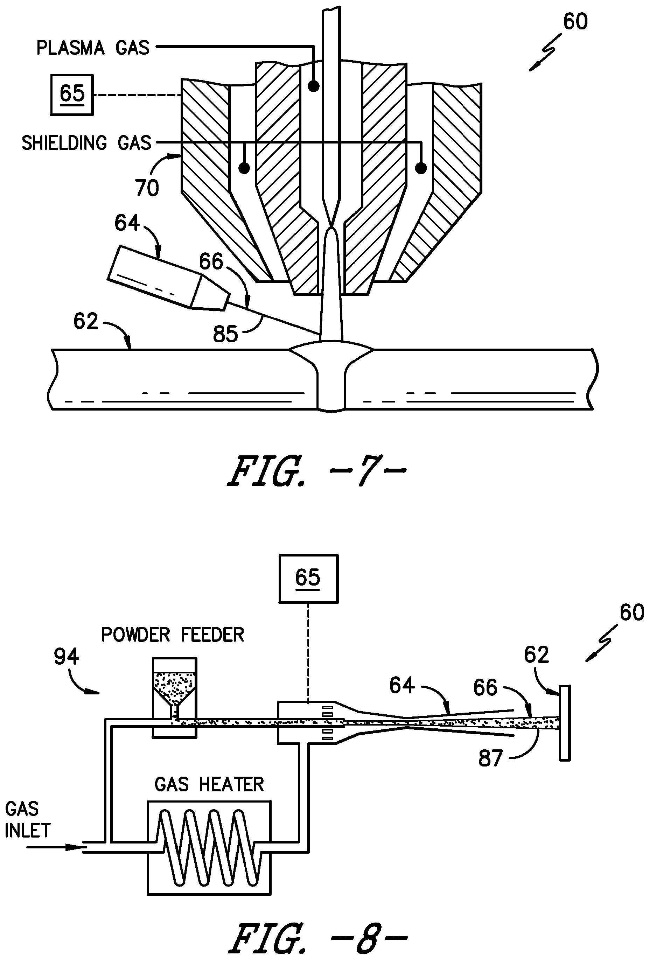

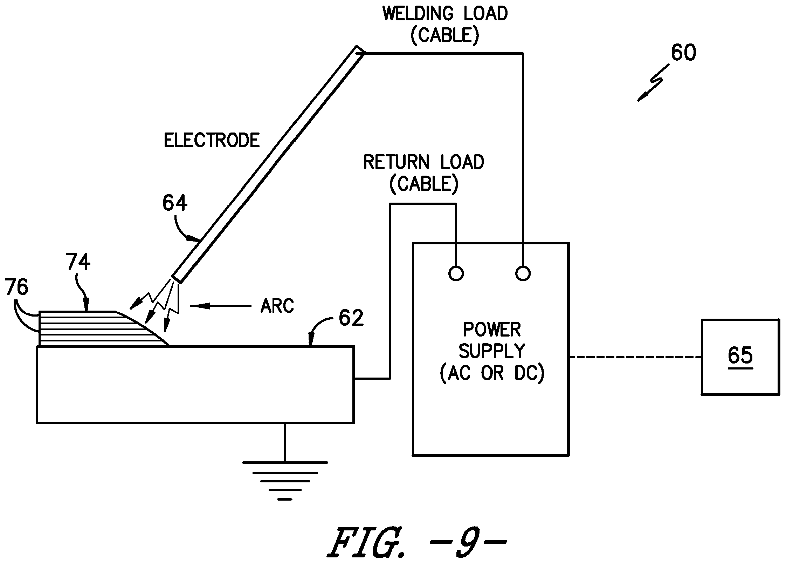

Referring particularly to FIGS. 4-13, various embodiments of the additive manufacturing system 60 for producing such components are illustrated. For example, as shown in FIGS. 4-9, the additive manufacturing system 60 may include various types of systems, including but not limited to, electron beam systems (FIG. 4), laser powder systems (FIG. 5), laser wire systems (FIG. 6), plasma wire systems (FIG. 7), cold spray systems (FIG. 8), and/or arc welding systems (FIG. 9). As such, the additive manufacturing system 60 of the present disclosure may use various types of materials, such as feed wires 85 and/or powder 89 for building up the components 74 described herein.

More specifically, as shown in FIGS. 4-10, the additive manufacturing system 60 of the present disclosure generally includes a substrate 62 (i.e. a printing surface), a nozzle 64 mounted relative to (e.g. above) the substrate 62 for depositing a material 66 onto the substrate 62, a curing system 70 for curing the material 66 on the substrate 62, a controller 65, and at least one moveable molding assembly 80 for providing a desired surface finish of the component 74. Thus, as shown, the controller 65 is configured to control the various components of the system 60 so as to melt the material 66 to build up the component 74 using successive layers 76 atop each other based on a digital model of the component 74.

More particularly, as shown in FIGS. 4, 6, 7, and 10, the material 66 may correspond to a feed wire 85 moveably positioned through the nozzle 64 and arranged adjacent to the substrate 62. Alternatively, as shown in FIGS. 5 and 8, the material 66 may correspond to a feed powder 89 dispensed through the nozzle 64.

Further, the curing system 70 may be any suitable system for curing the deposited material 66. For example, as shown in FIG. 4, the curing system 70 may correspond to an electron gun 68 for generating an electron beam 72 that melts a distal end 87 of the wire 85 as the distal end 87 of the wire 85 is fed through the nozzle 64. In such embodiments, the wire 85 may be melted by the electron beam 72 using inert gas shielding in either an open environment or in a sealed chamber. In further embodiments, as shown in FIG. 4, the electron gun 68 may include a heat source 75 enclosed in a vacuum chamber 73 for generating the electron beam 72, which may also be communicatively coupled to the controller 65.In further embodiments, as shown in FIGS. 5 and 6, the curing system 70 may correspond to a laser generator 90. In such embodiments, as shown, the laser generator 90 is configured to generate a laser 91 that melts a powder material 89 (or a feed wire 85) on the substrate 62 to form the component 74.

Referring now to FIG. 7, the curing system 70 may further include a plasma generator 92. In such systems, as shown, plasma gas is shielded by a shielding gas and deposited onto the substrate 62 to cure the feed wire 85 thereon. In addition, as shown in FIG. 8, the curing system 70 may include a cold spray system 94. For example, as shown, the cold spray system 94 generally includes a supersonic gas jet or nozzle 64 that deposit material in powder form onto the substrate 62. In yet another embodiment, as shown in FIG. 9, the curing system 70 may include an arc welding system 96.

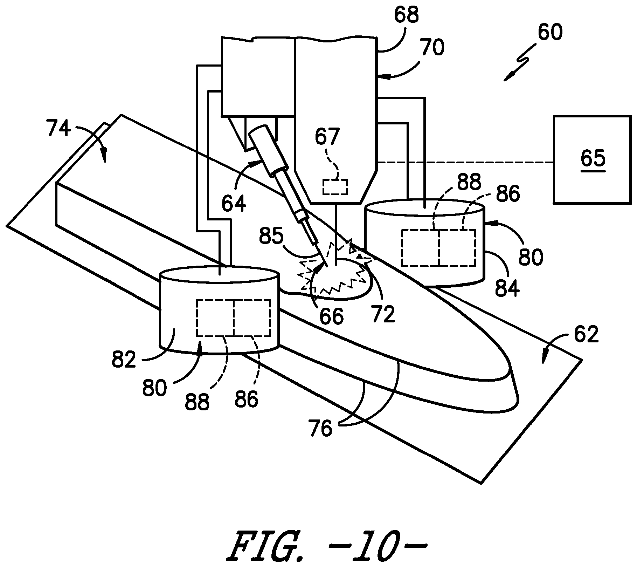

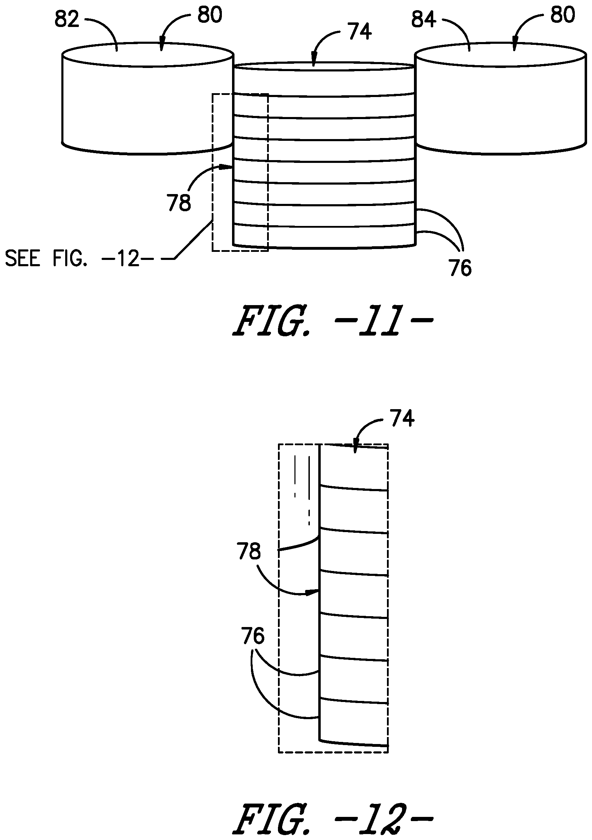

Referring particularly in FIGS. 10 and 11, the moveable molding assembly 80 includes a first mold 82 and a second mold 84 arranged on opposing sides of the component 74. As such, the first and second molds 82, 84 are configured to laterally limit the melted material 66. It should further be understood that the molding assembly 80 may include a single mold or more than two molds and can be arranged in any suitable configuration so as to provide the desired surface finish. For example, as shown particularly in FIG. 10, the molding assembly(s) 80 may be mounted to the nozzle 64. Alternatively, the molding assembly 80 may be mounted to any suitable location of the additive manufacturing system 60, for example, the laser generator 70.

More specifically, as shown particularly in FIG. 10, the moveable molding assembly(s) 80 is arranged on an exterior surface of the layers 76. In addition, in particular embodiments, the molding assembly 80 may be placed in a predetermined location with respect to the material 66. For example, the predetermined location may include forward, beside, or aft of the distal end 68 of the material 66. Further, the moveable molding assembly(s) 80 may be configured to move with the nozzle 64 so as to mold the melted material 66 while still in a semi-solid state. Thus, as shown in FIG. 12, the moveable molding assembly 80 is configured to provide a desired surface finish to the exterior surface 78 of the component 74 without having to further machine the final component after the part has cured.

In further embodiments, the molds of the moveable molding assembly 80 may be constructed of ceramic, plastic, metal, and/or another other suitable material. In another embodiment, the moveable molding assembly 80 may include a roller or a sliding plate. In such embodiments, the roller or a sliding plate of the molding assembly 80 is configured to move with the nozzle 64 and slide along the exterior surface 78 of the component 74 so as to mold the stacked layers 76 before curing such that the final part has a smooth surface finish without further machining. Alternatively, the moveable molding assembly 80 may operate without contact, e.g. using pressurized air, magnetic repulsion, or similar.

In additional embodiments, the molding assembly 80 may also include various features to assist in providing the desired surface finish. For example, as shown in FIG. 10, the molding assembly may 80 include a refrigeration or cooling system 86 to assist in curing the component 74 after the melted material has been limited as desired. Further, the molding assembly 80 may include a non-stick system 88 to prevent the molding assembly 80 from sticking to the layers 76 of the melted material 66. For example, in one embodiment, the non-stick system 88 may be part of the cooling system 86, but the cooling system 86 may also have heating capabilities such that the molds 82, 84 may remain above a certain temperature during molding of the layers 76. In addition, the molds 82, 84 may be constructed of a certain material that prevents suck sticking from occurring.

In further embodiments, the moveable molding assembly 80 can be passive or active by direct monitoring of the exterior surface 78, e.g. via the controller 65. In such embodiments, the additive manufacturing system 60 may include one or more sensors 67, 69 for monitoring of the exterior surface 78 of the layers 76. For example, such sensors 67, 69 may be configured to measure temperature, rate of cure, thickness, etc. of the component 74. Such sensors 67, 69 may also be configured to monitor various parameters of the laser 72. In such embodiments, the molding assembly 80 is configured to move with the nozzle 64 based on the monitored parameters.

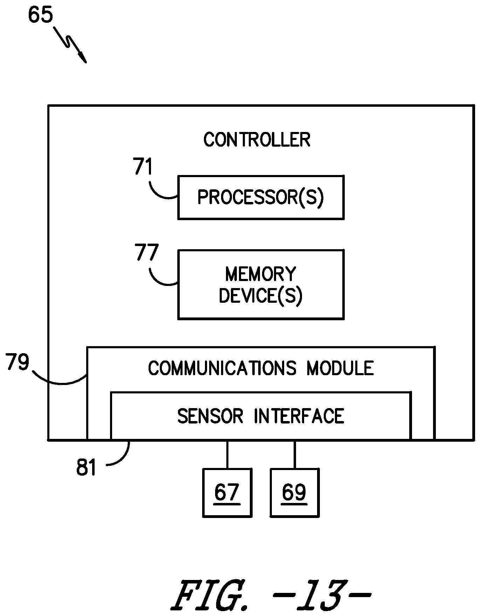

Referring particularly to FIG. 13, a block diagram of one embodiment of the controller 65 according to the present disclosure is illustrated. As shown, the controller 65 may include a computer or other suitable processing unit that may include suitable computer-readable instructions that, when implemented, configure the controller 65 to perform various functions, such as receiving, transmitting and/or executing control signals of the additive manufacturing system 60. More specifically, as shown, there is illustrated a block diagram of one embodiment of suitable components that may be included within the controller 65 in accordance with example aspects of the present disclosure. As shown, the controller 65 may include one or more processor(s) 71 and associated memory device(s) 77 configured to perform a variety of computer-implemented functions.

As used herein, the term "processor" refers not only to integrated circuits referred to in the art as being included in a computer, but also refers to a controller, a microcontroller, a microcomputer, a programmable logic controller (PLC), an application specific integrated circuit, and other programmable circuits. Additionally, the memory device(s) 77 may generally comprise memory element(s) including, but not limited to, computer readable medium (e.g., random access memory (RAM)), computer readable non-volatile medium (e.g., a flash memory), a floppy disk, a compact disc-read only memory (CD-ROM), a magneto-optical disk (MOD), a digital versatile disc (DVD) and/or other suitable memory elements.

Such memory device(s) 77 may generally be configured to store suitable computer-readable instructions that, when implemented by the processor(s) 71, configure the controller 65 to perform various functions as described herein. Additionally, the controller 65 may also include a communications interface 79 to facilitate communications between the controller 65 and the various components of the additive manufacturing system 60. An interface can include one or more circuits, terminals, pins, contacts, conductors, or other components for sending and receiving control signals. Moreover, the controller 65 may include a sensor interface 81 (e.g., one or more analog-to-digital converters) to permit signals transmitted from the sensors 67, 69 to be converted into signals that can be understood and processed by the processors 71.

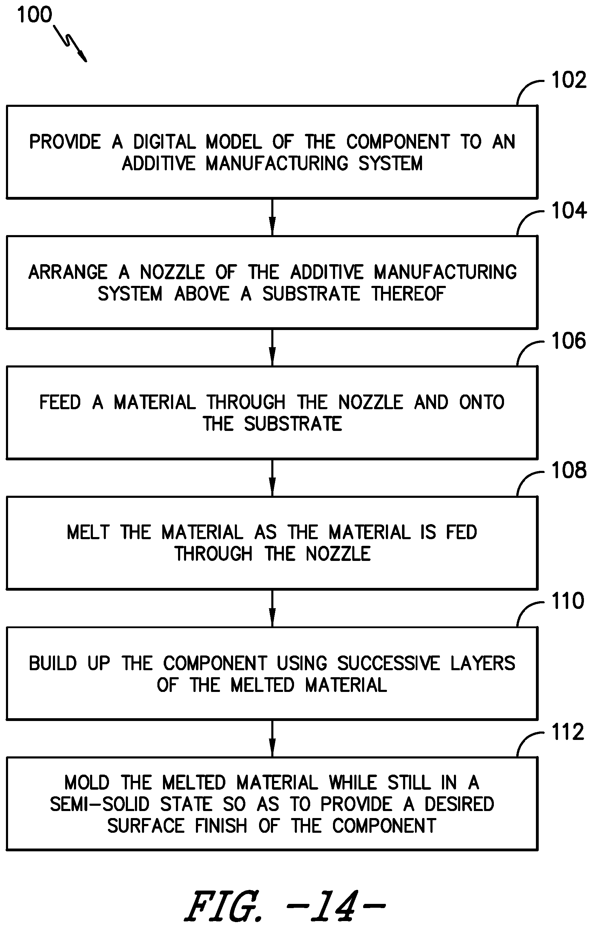

Referring now to FIG. 14, a flow diagram of one embodiment of a method 100 for producing a component 74 via additive manufacturing is illustrated. As shown at 102, the method 100 includes providing a digital model of the component 74 to the additive manufacturing system 60, e.g. to the controller 65 thereof. For example, in one embodiment, the digital model of the component 74 may include a CAD model of the component 74. As shown at 104, the method 100 includes arranging the nozzle 64 of the additive manufacturing system 60 relative to the substrate 62 thereof. As shown at 106, the method 100 includes feeding the material 66 through the nozzle 64 and onto the substrate 62. As shown at 108, the method 100 includes melting the material 66 as the material 66 is fed through the nozzle 64. As shown at 110, the method 100 includes building up the component 74 using successive layers 76 of the melted material 66. As shown at 112, the method 100 includes molding the melted material 66 while still in a semi-solid state so as to provide a desired surface finish of the component 74. For example, in one embodiment, as shown in FIGS. 10 and 11, the method 100 may include limiting flow of the melted material 66 (i.e. the feed wire 85) while still in a semi-solid state, e.g. via the first and second molds 82, 84, so as to provide a desired surface finish of the component 74.

Although described above in the context of a standalone system and/or method, it is to be understood that the above described systems and methods may be used in conjunction with and/or employed on a multi-functional system that includes any type of additive manufacturing system or method.

Such additive manufacturing systems and methods include, for example, and without limitation, vat photopolymerization, powder bed fusion, binder jetting, material jetting, sheet lamination, material extrusion, directed energy deposition and hybrid systems. These systems and methods may include, for example, and without limitation, stereolithography; digital light processing; scan, spin, and selectively photocure; continuous liquid interface production; selective laser sintering; direct metal laser sintering; selective laser melting; electron beam melting; selective heat sintering; multi-jet fusion; smooth curvatures printing; multi-jet modeling; laminated object manufacture; selective deposition lamination; ultrasonic additive manufacturing; fused filament fabrication; fused deposition modeling; laser metal deposition; laser engineered net shaping; direct metal deposition; hybrid systems; and combinations of these methods and systems. These methods and systems may employ, for example, and without limitation, all forms of electromagnetic radiation, heating, sintering, melting, curing, binding, consolidating, pressing, embedding, and combinations thereof.

These methods and systems employ materials including, for example, and without limitation, polymers, plastics, metals, ceramics, sand, glass, waxes, fibers, biological matter, composites, and hybrids of these materials. These materials may be used in these methods and systems in a variety of forms as appropriate for a given material and method or system, including for example without limitation, liquids, solids, powders, sheets, foils, tapes, filaments, pellets, liquids, slurries, wires, atomized, pastes, and combinations of these forms.

This written description uses examples to disclose the invention, including the best mode, and also to enable any person skilled in the art to practice the invention, including making and using any devices or systems and performing any incorporated methods. The patentable scope of the invention is defined by the claims.

## Claims

1. An additive manufacturing system (60) for producing a component (74), the additive manufacturing system (60) comprising:
a substrate (62);
a nozzle (64) mounted relative to the substrate (62) for depositing a material (66) onto the substrate (62);
a curing system (70) for curing the material (66) on the substrate (62), wherein the cured material (66) builds up on the substrate (62) to form the component (74) using successive layers (76) atop each other; and,
a moveable molding assembly (80) arranged on an exterior surface (78) of the successive layers (76), the moveable molding assembly (80) configured to move with the nozzle (64) so as to mold the material (66) before the material (66) has cured,
wherein the moveable molding assembly (80) comprises a first mold (82) and a second mold (84), the first and second molds (82, 84) arranged on opposing sides of the component (74) so as to laterally limit the melted material (66).

2. The additive manufacturing system (60) of claim 1, wherein the at least one moveable molding assembly (80) is mounted to the nozzle (64).

3. The additive manufacturing system (60) of claim 1 or 2, wherein at least one of the first mold (82) or the second mold (84) comprises a roller or a sliding plate, at least one of the first mold (82) or the second mold (84) being constructed of at least one of ceramic, plastic, or metal.

4. The additive manufacturing system (60) of any of the preceding claims, wherein the moveable molding assembly (80) comprises at least one of pressurized air or magnetic repulsion.

5. The additive manufacturing system (60) of any of the preceding claims, wherein the moveable molding assembly (80) comprises at least one of a cooling system (86) or a non-stick system (88).

6. The additive manufacturing system (60) of any of the preceding claims, wherein the moveable molding assembly (80) is placed in a predetermined location with respect to the material (66), the predetermined location comprising at least one of forward, beside, or aft of the material (66).

7. The additive manufacturing system (60) of any of the preceding claims, wherein the material (66) comprises at least one of powder (89) or a wire (85).

8. The additive manufacturing system (60) of claim 7, wherein the curing system (70) comprises at least one of a laser generator (90), an electron gun (68), a plasma generator (92), a cold spray system (94), or an arc welding system (96).

9. The additive manufacturing system (60) of claim 8, wherein the wire (85) is moveably positioned through the nozzle (64) and arranged adjacent to the substrate (62), the curing system (70) configured to melt a distal end of the wire (85) as the distal end of the wire (85) is fed through the nozzle (64), the melted wire (85) being used to build up the component (74) using successive layers (76) atop each other.

10. A method (100) for producing a component (74) via additive manufacturing, the method (100) comprising:
arranging a nozzle (64) of an additive manufacturing system (60) relative to a substrate (62) thereof;
feeding a material (66) through the nozzle (64) and onto the substrate (62);
curing the material (66) as the material (66) is fed through the nozzle (64);
building up the component (74) using successive layers (76) of the melted material (66); and,
molding the melted material (66) while still in a semi-solid state so as to provide a desired surface finish of the component (74); and
smoothing the successive layers (76) while still in the semi-solid state via first and second molds (82, 84) of the moveable molding assembly (80), the first and second molds (82, 84) arranged on opposing sides of the component (74) so as to laterally limit the melted material (66).

11. The method (100) of claim 10, further comprising mounting at least one moveable molding assembly (80) to the nozzle (64) and molding the melted material (66) while still in the semi-solid state via the at least one moveable molding assembly (80).

12. The method (100) of claims 10 or 11, further comprising monitoring, via one or more sensors (67, 69), the exterior surface (78) of the successive layers (76) and moving the moveable molding assembly (80) based on the monitoring.

13. The method (100) of claims 10 to 12, wherein the component (74) comprises a wind turbine component (74), the wind turbine component (74) comprises at least one of a rotor, a nacelle, a tower, a blade root section, a blade tip section, a spar cap, a shear web, or a rotor blade panel, the rotor blade panel comprising at least one of a pressure side surface, a suction side surface, a trailing edge, a leading edge, or combinations thereof.

## Patentansprüche

1. Ein System zur additiven Fertigung (60) zur Herstellung eines Bauteils (74), wobei das System zur additiven Fertigung (60) aufweist:
ein Substrat (62);
eine Düse (64), die relativ zu dem Substrat (62) angebracht ist, um ein Material (66) auf das Substrat (62) aufzubringen;
ein Aushärtungssystem (70) zum Aushärten des Materials (66) auf dem Substrat (62), wobei sich das ausgehärtete Material (66) auf dem Substrat (62) aufbaut, um das Bauteil (74) unter Verwendung aufeinanderfolgender Schichten (76) zu bilden; und,
eine bewegliche Formgebungsanordnung (80), die auf einer Außenfläche (78) der aufeinanderfolgenden Schichten (76) angeordnet ist, wobei die bewegliche Formgebungsanordnung (80) derart konfiguriert ist, dass sie sich mit der Düse (64) mitbewegt, um das Material (66) zu formen, bevor das Material (66) ausgehärtet ist,
wobei die bewegliche Formgebungsanordnung (80) eine erste formgebende Form (82) und eine zweite formgebende Form (84) aufweist, wobei die erste und die zweite formgebende Form (82, 84) auf gegenüberliegenden Seiten des Bauteils (74) angeordnet sind, um das geschmolzene Material (66) seitlich zu begrenzen.

2. Das System (60) zur additiven Fertigung nach Anspruch 1, wobei die mindestens eine bewegliche Formanordnung (80) an der Düse (64) angebracht ist.

3. Das System zur additiven Fertigung (60) nach Anspruch 1 oder 2, wobei mindestens eine der ersten Form (82) oder der zweiten Form (84) eine Walze oder eine Gleitplatte aufweist, wobei mindestens eine der ersten Form (82) oder der zweiten Form (84) aus einem Material wie Keramik, Kunststoff oder Metall hergestellt ist.

4. Das System zur additiven Fertigung (60) nach einem der vorhergehenden Ansprüche, wobei die bewegliche Formanordnung (80) zumindest eine Druckluft und/oder magnetische Abstoßung aufweist.

5. Das additive Fertigungssystem (60) nach einem der vorhergehenden Ansprüche, wobei die bewegliche Formgebungsanordnung (80) mindestens ein Kühlsystem (86) und/oder ein Antihaft-System (88) aufweist.

6. Das additive Fertigungssystem (60) nach einem der vorhergehenden Ansprüche, wobei die bewegliche Formgebungsanordnung (80) an einer vorbestimmten Stelle in Bezug auf das Material (66) angeordnet ist, wobei die vorbestimmte Stelle zumindest vor dem Material (66), neben dem Material und/oder hinter dem Material (66) angeordnet ist.

7. Das additive Fertigungssystem (60) nach einem der vorhergehenden Ansprüche, wobei das Material (66) mindestens ein Pulver (89) und/oder einen Draht (85) aufweist.

8. Das additive Fertigungssystem (60) nach Anspruch 7, wobei das Aushärtungssystem (70) mindestens einen Lasergenerator (90), eine Elektronenkanone (68), einen Plasmagenerator (92), ein Kaltgasspritzsystem (94) und/oder ein Lichtbogenschweißsystem (96) aufweist.

9. Additives Fertigungssystem (60) nach Anspruch 8, wobei der Draht (85) beweglich durch die Düse (64) positioniert und neben dem Substrat (62) angeordnet ist, wobei das Aushärtungssystem (70) derart konfiguriert ist, dass es ein distales Ende des Drahts (85) schmilzt, wenn das distale Ende des Drahts (85) durch die Düse (64) zugeführt wird, wobei der geschmolzene Draht (85) verwendet wird, um das Bauteil (74) unter Verwendung aufeinanderfolgender Schichten (76) übereinander aufzubauen.

10. Ein Verfahren (100) zur Herstellung eines Bauteils (74) mittels additiver Fertigung, wobei das Verfahren (100) aufweist:
Anordnen einer Düse (64) eines additiven Fertigungssystems (60) relativ zu einem Substrat (62);
Zuführen eines Materials (66) durch die Düse (64) und auf das Substrat (62);
Aushärten des Materials (66), während das Material (66) durch die Düse (64) zugeführt wird;
Aufbauen des Bauteils (74) unter Verwendung aufeinanderfolgender Schichten (76) des geschmolzenen Materials (66); und,
Formen des geschmolzenen Materials (66), während es sich noch in einem halberstarrten Zustand befindet, um eine gewünschte Oberflächenbeschaffenheit des Bauteils (74) bereitzustellen; und
Glätten der aufeinanderfolgenden Schichten (76), während sie sich noch im halberstarrten Zustand befinden, mit Hilfe einer ersten und einer zweiten formgebenden Form (82, 84) der beweglichen Formgebungsanordnung (80), wobei die erste und die zweite formgebende Form (82, 84) auf gegenüberliegenden Seiten des Bauteils (74) angeordnet sind, um das geschmolzene Material (66) seitlich zu begrenzen.

11. Das Verfahren (100) nach Anspruch 10, weiterhin aufweisend Anbringen mindestens einer beweglichen Formgebungsanordnung (80) an der Düse (64) und Formen des geschmolzenen Materials (66), während es sich noch im halberstarrten Zustand befindet, mit Hilfe der mindestens einen beweglichen Formgebungsanordnung (80).

12. Das Verfahren (100) nach Anspruch 10 oder 11, weiterhin aufweisend ein Überwachen der Außenfläche (78) der aufeinanderfolgenden Schichten (76) durch einen oder mehrere Sensoren (67, 69) und ein Bewegen der beweglichen Formgebungsanordnung (80) basierend auf der Überwachung.

13. Das Verfahren (100) nach einem der Ansprüche 10 bis 12, wobei die Komponente (74) eine Windturbinenkomponente (74) aufweist, wobei die Windturbinenkomponente (74) zumindest einen Rotor, eine Gondel, einen Turm, einen Blattwurzelabschnitt, einen Blattspitzenabschnitt, eine Holmkappe, einen Schersteg und/oder ein Rotorblattpaneel aufweist, wobei das Rotorblattpaneel zumindest eine druckseitige Oberfläche, eine saugseitige Oberfläche, eine Hinterkante, eine Vorderkante und/oder Kombinationen davon aufweist.

## Revendications

1. Système de fabrication additive (60) pour produire un composant (74), le système de fabrication additive (60) comprenant :
un substrat (62) ;
une buse (64) montée relativement au substrat (62) pour déposer un matériau (66) sur le substrat (62) ;
un système de durcissement (70) pour durcir le matériau (66) sur le substrat (62), dans lequel le matériau durci (66) se constitue sur le substrat (62) pour former le composant (74) en utilisant des couches successives (76) les unes au-dessus des autres ; et,
un ensemble de moulage mobile (80) disposé sur une surface extérieure (78) des couches successives (76), l'ensemble de moulage mobile (80) configuré pour se déplacer avec la buse (64) de sorte à mouler le matériau (66) avant que le matériau (66) ne soit durci, dans lequel l'ensemble de moulage mobile (80) comprend un premier moule (82) et un deuxième moule (84), les premier et deuxième moules (82, 84) disposés sur des côtés opposés du composant (74) de sorte à limiter latéralement le matériau fondu (66).

2. Système de fabrication additive (60) selon la revendication 1, dans lequel l'au moins un ensemble de moulage mobile (80) est monté sur la buse (64).

3. Système de fabrication additive (60) selon la revendication 1 ou 2, dans lequel au moins l'un parmi le premier moule (82) ou le deuxième moule (84) comprend un rouleau ou une plaque coulissante, au moins l'un parmi le premier moule (82) ou le deuxième moule (84) étant composé d'au moins l'un parmi le céramique, le plastique, ou le métal.

4. Système de fabrication additive (60) selon l'une quelconque des revendications précédentes, dans lequel l'ensemble de moulage mobile (80) comprend au moins l'un parmi l'air comprimé ou la répulsion magnétique.

5. Système de fabrication additive (60) selon l'une quelconque des revendications précédentes, dans lequel l'ensemble de moulage mobile (80) comprend au moins l'un parmi un système de refroidissement (86) ou un système antiadhésif (88).

6. Système de fabrication additive (60) selon l'une quelconque des revendications précédentes, dans lequel l'ensemble de moulage mobile (80) est placé dans un lieu prédéterminé par rapport au matériau (66), le lieu prédéterminé comprenant au moins l'un parmi en avant, à côté, ou en arrière du matériau (66).

7. Système de fabrication additive (60) selon l'une quelconque des revendications précédentes, dans lequel le matériau (66) comprend au moins l'un parmi une poudre (89) ou un fil (85).

8. Système de fabrication additive (60) selon la revendication 7, dans lequel le système de durcissement (70) comprend au moins l'un parmi un générateur laser (90), un canon à électrons (68), un générateur de plasma (92), un système de pulvérisation à froid (94), ou un système de soudage à l'arc (96).

9. Système de fabrication additive (60) selon la revendication 8, dans lequel le fil (85) est positionné de manière mobile à travers la buse (64) et disposé de manière adjacente au substrat (62), le système de durcissement (70) configuré pour faire fondre une extrémité distale du fil (85) lorsque l'extrémité distale du fil (85) est acheminée à travers la buse (64), le fil fondu (85) étant utilisé pour constituer le composant (74) en utilisant des couches successives (76) les unes au-dessus des autres.

10. Procédé (100) pour produire un composant (74) par le biais de la fabrication additive, le procédé (100) comprenant :
disposition d'une buse (64) d'un système de fabrication additive (60) relativement à un substrat (62) de celui-ci ;
acheminement d'un matériau (66) à travers la buse (64) et sur le substrat (62) ;
durcissement du matériau (66) lorsque le matériau (66) est acheminé à travers la buse (64) ;
constitution du composant (74) en utilisant des couches successives (76) du matériau fondu (66) ; et,
moulage du matériau fondu (66) tout en étant toujours à un état semi-solide de sorte à fournir un fini de surface souhaité du composant (74) ; et
lissage des couches successives (76) tout en étant toujours à l'état semi-solide par le biais des premier et deuxième moules (82, 84) de l'ensemble de moulage mobile (80), les premier et deuxième moules (82, 84) disposés sur des côtés opposés du composant (74) de sorte à limiter latéralement le matériau fondu (66).

11. Procédé (100) selon la revendication 10, comprenant en outre le montage d'au moins un ensemble de moulage mobile (80) sur la buse (64) et le moulage du matériau fondu (66) tout en étant toujours à l'état semi-solide par le biais de l'au moins un ensemble de moulage mobile (80).

12. Procédé (100) selon les revendications 10 ou 11, comprenant en outre la surveillance, par le biais d'un ou plusieurs capteurs (67, 69), de la surface extérieure (78) des couches successives (76) et le déplacement de l'ensemble de moulage mobile (80) en fonction de la surveillance.

13. Procédé (100) selon les revendications 10 à 12, dans lequel le composant (74) comprend un composant d'éolienne (74), le composant d'éolienne (74) comprend au moins l'un parmi un rotor, une nacelle, une tour, une section de pied de pale, une section de bout de pale, une semelle de longeron, une âme de cisaillement, ou un panneau de pale de rotor, le panneau de pale de rotor comprenant au moins l'une parmi une surface côté pression, une surface côté aspiration, un bord de fuite, un bord d'attaque, ou leurs combinaisons.
